# EUROPÄISCHE PATENTANMELDUNG

(11) **EP 1 063 491 A2**
(43) Veröffentlichungstag der Anmeldung: **27.12.2000**
(21) Anmeldenummer: 00113325.5
(22) Anmeldetag: 23.06.2000
(51) Int. Cl.: G01B 13/16

(54) **Verfahren und Vorrichtung zum Bestimmen der Position eines Oberflächenabschnitts eines geformten Kunststoffteils, insbesondere zum Überprüfen der Qualität eines solchen**

(30) Priorität: 23.06.1999 DE 19928421; 09.09.1999 DE 19942968
(71) Anmelder: HEKUMA Herbst Maschinenbau GmbH, 85386 Eching (DE)
(72) Erfinder: Herbst, Richard, 85386 Eching (DE)
(74) Vertreter: Witte, Alexander, Dr.-Ing.

(57) **Zusammenfassung**

Die vorliegende Erfindung betrifft ein Verfahren sowie eine Vorrichtung zum Bestimmen der Position eines Oberflächenabschnitts (32) eines geformten Kunststoffteils (12). Das Verfahren ist durch die folgenden Schritte gekennzeichnet: Bereitstellen eines Sensorelements (30) mit zumindest einem Auslaß (36) für ein fluides Medium (52), wobei der Auslaß (36) im Bereich einer Sollposition des Oberflächenabschnitts (32) positioniert wird, Ausströmenlassen des fluiden Mediums (52) durch den Auslaß (36) und Bestimmen eines Parameters, der für eine Austrittsmenge des fluiden Mediums (52) aus dem Auslaß (36) charakteristisch ist. Die Erfindung kann zur Qualitätskontrolle von geformten Kunststoffteilen (12) beim Entformen aus dem Formnest einer Formmaschine oder zur Positionsbestimmung eines Kunststoffteils verwendet werden.

## Beschreibung

Die vorliegende Erfindung betrifft ein Verfahren sowie eine Vorrichtung zum Bestimmen der Position eines Oberflächenabschnitts eines geformten Kunststoffteils. Die Erfindung betrifft darüber hinaus jedoch auch ganz allgemein die Überprüfung der Qualität des geformten Kunststoffteils, vor allem im Hinblick auf seine Formtreue.

Verfahren und Vorrichtungen zum formgebenden Herstellen von Kunststoffteilen sind im Stand der Technik hinreichend bekannt. Beispiele für derartige Verfahren sind das Spritzgießen von Kunststoffteilen oder das Tiefziehen. Den meisten dieser formgebenden Verfahren ist gemeinsam, daß der zu formende Kunststoff für den eigentlichen Formvorgang erwärmt oder sogar erhitzt wird, um ihn besonders leicht formbar zu machen. Dies hat zur Folge, daß ein frisch hergestelltes, noch warmes Kunststoffteil zunächst abkühlen muß, bevor es die ihm vorgegebene Form endgültig beibehält.

Es ist weiterhin bekannt, daß Kunststoffe, die zum Formen von Kunststoffteilen verwendet werden, sich beim Aufheizen räumlich ausdehnen und sodann beim Abkühlen räumlich wieder zusammenziehen. Dies hat zur Folge, daß ein frisch geformtes Kunststoffteil beim Abkühlen nach dem eigentlichen Formvorgang schrumpft und sich dabei verformt. Je nach den Abmessungen des hergestellten Kunststoffteils und darüber hinaus in Abhängigkeit von dem verwendeten Kunststoffmaterial kann dieser Effekt unterschiedlich stark ausgeprägt sein.

Es gibt nun mittlerweile zahlreiche Anwendungsfälle, bei denen die Form eines hergestellten Kunststoffteils innerhalb sehr enger, vorgegebener Toleranzen liegen muß. Dabei müssen Formveränderungen, wie sie beispielsweise beim Abkühlen des Kunststoffteils nach dem eigentlichen Formvorgang auftreten, genau berücksichtigt werden, um die gewünschte Qualität zu gewährleisten. Hierzu ist es entsprechend erforderlich, die Formtreue eines in einem vorhergehenden Herstellungsvorgang geformten Kunststoffteils möglichst exakt zu überprüfen. Dies kann anhand der Bestimmung der Position eines Oberflächenschnitts, der auch die gesamte Oberfläche des Kunststoffteils umfassen kann, geschehen. In Abhängigkeit des Ergebnisses der Überprüfung können dann gegebenenfalls Korrekturmaßnahmen ergriffen werden.

Ein weiterer Anwendungsfall, bei dem eine genaue Information über die Position eines Oberflächenabschnitts eines hergestellten Kunststoffteils benötigt wird, ergibt sich beim Entformen des Kunststoffteils aus dem Formnest beispielsweise einer Kunststoff-Spritzgießmaschine. Hier ist es erforderlich, das in der Regel noch warme und daher leicht verformbare Kunststoffteil möglichst behutsam aufzunehmen. Geschieht dies mit einem Entnahmegreifer, muß die Greif- und Festhaltebewegung dieses Entnahmegreifers sorgfältig gesteuert bzw. geregelt werden, um ein unbeabsichtigtes Verformen des noch warmen Kunststoffteils zu verhindern. Häufig muß der Entnahmegreifer in einem solchen Fall auch einer Schrumpfung des abkühlenden Kunststoffteils nachgeführt werden. Eine dementsprechende Regelung benötigt als Eingangsgröße wiederum ein Signal, das einen Rückschluß auf die Position eines Oberflächenabschnitts des geformten Kunststoffteils erlaubt.

Darüber hinaus sind Informationen über die exakte Position einer Oberfläche bzw. eines Oberflächenabschnitts eines Kunststoffteils häufig auch bei nachfolgenden Bearbeitungsschritten, wie bspw. beim Zusammenfügen verschiedener Kunststoffteile, notwendig. Dabei tritt die Überprüfung der Formtreue in den Hintergrund. Aus der Position des Oberflächenabschnitts läßt sich hier jedoch eine Aussage über die exakte Raumlage des Kunststoffteils gewinnen, das bspw. dann mit einem anderen Kunststoffteil paßgenau zusammengesteckt werden soll.

Es ist daher Aufgabe der vorliegenden Erfindung, ein Verfahren und eine Vorrichtung der eingangs genannten Art anzugeben, mit dem die Position eines Oberflächenabschnitts eines geformten Kunststoffteils auf einfache Weise und mit hoher Genauigkeit bestimmbar ist.

Diese Aufgabe wird durch ein Verfahren der eingangs genannten Art gelöst, das folgende Schritte aufweist:
- Bereitstellen eines Sensorelements mit zumindest einem Auslaß für ein fluides Medium, wobei der Auslaß im Bereich einer Sollposition des Oberflächenabschnitts positioniert wird,
- Auströmenlassen des fluiden Mediums durch den Auslaß, und
- Bestimmen eines Parameters, der für eine Austrittsmenge des fluiden Mediums aus dem Auslaß charakteristisch ist.

Die genannte Aufgabe wird des weiteren durch eine Vorrichtung der eingangs genannten Art gelöst, die ein Sensorelement aufweist, mit zumindest einem Auslaß für ein fluides Medium, wobei der Auslaß im Bereich einer Sollposition des Oberflächenabschnitts positioniert ist, ferner mit Mitteln zum Ausströmenlassen des fluiden Mediums aus dem Auslaß und mit Meßmitteln zum Bestimmen eines Parameters, der für eine Austrittsmenge des fluiden Mediums aus dem Auslaß charakteristisch ist.

Unter der Bezeichnung "fluides Medium" werden dabei vorliegend sämtliche gasförmigen oder flüssigen Stoffe verstanden. Derartigen Stoffen ist gemeinsam, daß sie sich auch in kleinste Hohlvolumina hinein ausbreiten können, so daß ihre Verwendung die Detektion auch kleinster Abweichungen eines geformten Kunststoffteils von seiner vorgegebenen Sollform oder die Detektion kleinster Lageabweichungen ermöglicht. Der Oberflächenabschnitt, dessen Position bestimmt werden soll, kann eine ebene, geschlossene Fläche sein. Er kann jedoch auch Vertiefungen oder Löcher aufweisen. Bspw. kann mit Hilfe des erfindungsgemäßen Verfahrens auch die Größe und Lage einer Bohrung in der Oberfläche des Kunststoffteils bestimmt werden.

Das erfindungsgemäße Verfahren und die entsprechende Vorrichtung beruhen auf dem Gedanken, daß Abweichungen des Oberflächenabschnitts von seiner vorgegebenen Sollform oder seiner Soll-Lage stets zur Bildung oder Vergrößerung von Hohlvolumina im Bereich des Kunststoffteils führen. Das Auftreten und gegebenenfalls die Größe dieser Volumina läßt sich durch Einleiten eines fluiden Mediums auf einfache Weise bestimmen. Bspw. ist die Menge an fluidem Medium, die in vorhandene Hohlvolumina zwischen einer zur Sollform komplementären Sensorfläche und der Oberfläche des Kunststoffteils einströmt, ein Maß für die Formtreue des Kunststoffteils. Strömt überhaupt kein fluides Medium durch den Auslaß in der Sensorfläche, ist dies ein Zeichen, daß die Oberfläche des Kunststoffteils exakt der vorgegebenen Sollform entspricht.

Die Überprüfung der Formtreue eines geformten Kunststoffteils mit Hilfe eines fluiden Mediums kann grundsätzlich an jeder Stelle im Produktionsprozeß durchgeführt werden. Besonders vorteilhaft ist es jedoch, wenn eine Qualitätskontrolle so früh wie möglich im Verlauf des Produktionprozesses begonnen wird. In diesem Fall können Fehler im Produktionsprozeß nämlich frühzeitig erkannt und gegebenenfalls beseitigt werden. Aus diesem Grund ist ein weiterer Aspekt der Erfindung, der auch für sich genommen von Bedeutung ist, daß die Überprüfung der Formtreue bzw. allgemeiner die Durchführung von Qualitätskontrollen bereits beim Entformen des Kunststoffteils aus dem Formnest einer Formmaschine begonnen wird. Infolge dessen ist ein weiterer Aspekt der Erfindung, daß die Qualität des geformten Kunststoffteils bereits überprüft wird, während das Kunststoffteil mit einem Entnahmegreifer aus dem Formnest der Formmaschine entformt wird.

Mit geeigneten Meßmitteln, die nachfolgend anhand bevorzugter Ausgestaltungen der Erfindung beispielhaft erläutert werden, kann auf einfache und gleichzeitig sehr exakte Weise festgestellt werden, ob und gegebenenfalls wie viel fluides Medium durch den Auslaß ausströmt. Da die Menge an ausgeströmtem fluiden Medium, wie bereits erwähnt, ein Maß für die Abweichungen des Kunststoffteils von seiner vorgegebenen Sollform oder -lage ist, kann aufgrund des erfindungsgemäßen Verfahrens sowie mit Hilfe der entsprechenden Vorrichtung die Position des Oberflächenabschnitts des eines geformten Kunststoffteils, allgemeiner seine Qualität und/oder Lage, sehr einfach und gleichzeitig sehr genau bestimmt werden.

Die genannte Aufgabe ist somit vollständig gelöst.

Das erfindungsgemäße Verfahren sowie die entsprechende Vorrichtung besitzen darüber hinaus den Vorteil, daß durch eine geeignete Regelung des Drucks, mit dem das fluide Medium aus dem Auslaß ausströmt, gleichzeitig auch die Kraft bestimmt wird, mit der das fluide Medium beim Austritt aus dem Auslaß gegen die Oberfläche des Kunststoffteils anströmt. Durch eine Regelung dieses Drucks ist es daher in gewissem Rahmen möglich, Formfehler des geformten Kunststoffteils mit Hilfe des fluiden Mediums zu korrigieren. Gegebenenfalls wird der Druck dabei in Form eines Unterdrucks an das Kunststoffteil angelegt.

Das beschriebene Verfahren und die Vorrichtung sind besonders geeignet bei einer Überprüfung der Formtreue von vergleichsweise dickwandigen Kunststoffteilen, wie beispielsweise sogenannten Preforms oder dickwandigen Kunststoffdosen. Grund hierfür ist, daß derartige Kunststoffteile wegen ihrer großen Materialstärke vergleichsweise langsam abkühlen, so daß die Formtreue der Kunststoffteile nach dem eigentlichen Formvorgang über einen recht langen Zeitraum überwacht werden muß. Dies ist mit dem kontinuierlich durchführbaren Verfahren sehr gut möglich.

Andererseits können das beschriebene Verfahren sowie die Vorrichtung auch sehr gut verwendet werden, um flächige Kunststoffteile auf ihre Formtreue hin zu überprüfen. Der Grund hierfür ist, daß sich die Menge an fluidem Medium, das durch den Auslaß austritt, bereits bei sehr geringen Abweichungen des Kunststoffteils von seiner Sollform ändert. Besonders gut lassen sich mit diesem Verfahren daher beispielsweise unerwünschte Durchbiegungen von CD-Hüllen feststellen.

In einer Ausgestaltung der Erfindung wird der Auslaß direkt an der Sollposition positioniert.

Diese Maßnahme besitzt den Vorteil, daß bereits das geringste Entweichen von fluidem Medium aus dem Auslaß ein Signal für ein Abweichen von der Sollform bzw. -lage angibt. Nur in dem Fall, daß überhaupt kein fluides Medium aus dem Auslaß austritt, werden die Sollbedingungen eingehalten. Im Gegensatz dazu ist es jedoch auch möglich, bei der Durchführung des erfindungsgemäßen Verfahrens kontinuierlich einen Strom an fluidem Medium durch den Auslaß austreten zu lassen. In einem solchen Fall sind Abweichungen des Stroms an fluidem Medium von einem erwarteten Sollstrom ein Maß für die Abweichungen des Kunststoffteils von seinen Sollbedingungen. Die genannte Maßnahme besitzt demgegenüber den Vorteil, daß eine scharfe Ja-Nein-Entscheidung über die Einhaltung der Sollbedingungen auf einfache Weise erhältlich ist. Dementsprechend ist die Abweichung des Kunststoffteils von seinen Sollbedingungen hier meßtechnisch einfacher zu erfassen.

In einer bevorzugten Ausgestaltung der Erfindung wird als Sensorelement eine Sensorfläche verwendet, die komplementär zu einer Sollform des Oberflächenabschnitts geformt ist. Bei der erfindungsgemäßen Vorrichtung weist das Sensorelement daher eine entsprechende Sensorfläche auf.

Diese Maßnahme ist besonders geeignet, um die Formtreue eines Kunststoffteils zu überprüfen. Die Maßnahme besitzt dabei den Vorteil, daß eine Aussage über die Einhaltung der geforderten Form des Oberflächenabschnitts bereits mit Hilfe einer einzigen Messung erhältlich ist. Die genannte Maßnahme liefert daher sehr schnell einen aussagekräftigen Wert für die Einhaltung der Formtreue.

Eine weitere bevorzugte Ausgestaltung der zuletzt genannten Maßnahme ist dadurch gekennzeichnet, daß durch den Auslaß ausgetretenes fluides Medium über zumindest einen in der Sensorfläche angeordneten Einlaß abgeführt wird. Eine entsprechend ausgestaltete Vorrichtung ist dadurch gekennzeichnet, daß in der Sensorfläche zumindest ein Einlaß zum Abführen von fluidem Medium angeordnet ist, das aus dem Auslaß ausgetreten ist.

Die genannte Maßnahme besitzt den Vorteil, daß hierdurch eine unbeabsichtigte und dementsprechend unerwünschte Verformung des Kunststoffteils durch fluides Medium, das unter zu hohem Druck oder in zu großer Menge aus dem zumindest einem Auslaß austritt, vermieden werden kann. Darüber hinaus besitzt die genannte Maßnahme den Vorteil, daß gegebenenfalls vorhandene Hohlvolumina zwischen der Sensorfläche und der Oberfläche des Kunststoffteils stetig von einem Strom an fluidem Medium durchströmt werden, so daß auch während der Überprüfung neu auftretende Volumina schnell gefüllt und somit detektiert werden können. Die genannte Maßnahme bietet somit eine sehr gute Möglichkeit für eine kontinuierliche Echtzeitüberprüfung von Kunststoffteilen während eines längeren Zeitraums.

In einer weiteren Ausgestaltung der Erfindung sind über die Sensorfläche räumlich verteilt mehrere Auslässe angeordnet.

Diese Maßnahme besitzt den Vorteil, daß hierdurch auch voneinander getrennte und somit voneinander unabhängige Hohlvolumina zwischen der Sensorfläche und der Oberfläche des Kunststoffteils detektiert und berücksichtigt werden können. Insgesamt wird dadurch die Genauigkeit bei der Überprüfung der Formtreue beträchtlich erhöht. Ein weiterer Vorteil ist, daß die mehreren Auslässe einen insgesamt vergrößerten Auslaßquerschnitt bereitstellen, so daß das fluide Medium unter geringerem Druck durch jeden der mehreren Auslässe hindurchtreten kann. Hierdurch werden unbeabsichtigte Verformungen des Kunststoffteils vermieden.

In einer weiteren Ausgestaltung der zuvor genannten Maßnahme wird der genannte Parameter bei dem erfindungsgemäßen Verfahren für jeden der verteilten Auslässe individuell bestimmt. Dementsprechend weist eine Vorrichtung in dieser Ausgestaltung Meßmittel auf zum individuellen Bestimmen des genannten Parameters für jeden der verteilten Auslässe.

Diese Maßnahme besitzt den Vorteil, daß vorhandene Abweichungen des Kunststoffteils nach Ort und Stelle individuell lokalisiert werden können. Infolge dessen besitzt die Maßnahme den Vorteil, daß nicht nur eine pauschale Aussage bezüglich der Formtreue des Kunststoffteils insgesamt getroffen werden kann, sondern daß darüber hinaus auch die Größe und Lage von Abweichungen individuell bestimmt werden kann.

Gemäß einer weiteren, bevorzugten Ausgestaltung der Erfindung wird als Sensorfläche eine Greiffläche eines Entnahmegreifers verwendet.

Diese Maßnahme besitzt den Vorteil, daß die Überprüfung der Formtreue eines geformten Kunststoffteils bereits unmittelbar nach dem Entformen aus dem Formnest bspw. einer Spritzgießmaschine erfolgen kann. Hierdurch kann auf Fehler im Produktionsablauf sehr schnell reagiert werden. Darüber hinaus besitzt die Maßnahme den Vorteil, daß der für die Austrittsmenge des fluiden Mediums und damit für die Formtreue eines Kunststoffteils charakteristische Parameter als Regelgröße für den Greifvorgang des Entnahmegreifers verwendet werden kann. Hierdurch ist es möglich, die Bewegungen eines Entnahmegreifers besonders sorgfältig und behutsam zu steuern und auch Formänderungen des Kunststoffteils nachzuführen.

In einer anderen Ausgestaltung der Erfindung wird als Sensorelement zumindest eine Nadeldüse verwendet.

Unter einer Nadeldüse wird dabei ein Sensorelement verstanden, dessen Auslaßende klein gegenüber der Ausdehnung des zu prüfenden Oberflächenabschnitts des Kunststoffteils ist. Diese Maßnahme besitzt den Vorteil, daß die Position des Oberflächenabschnitts unabhängig von dessen Form bestimmt werden kann. Hierdurch ist es möglich, das Sensorelement bei unterschiedlichen Kunststoffteilen mit verschiedenartig geformten Oberflächen bzw. Oberflächenabschnitten zu verwenden. Die erfindungsgemäße Vorrichtung ist aufgrund dieser Maßnahme daher vielfältiger einsetzbar.

In einer weiteren Ausgestaltung der zuvor genannten Maßnahme werden als Sensorelement zwei Nadeldüsen verwendet, deren Auslässe diametral zueinander angeordnet sind.

Bei dieser Ausgestaltung der Erfindung liegt der Meßbereich des Sensorelements zwischen den beiden Auslässen der Nadeldüsen. Zum Bestimmen der Position eines Oberflächenabschnitts muß das Kunststoffteil zwischen die beiden Auslässe gebracht werden. Die Maßnahme besitzt den Vorteil, daß hierbei zwei Meßwerte gewonnen werden, aus denen die Position des Oberflächenabschnitts bestimmt werden kann. Aufgrund dieser Redundanz besitzt diese Ausgestaltung eine höhere Zuverlässigkeit. Hinzu kommt, daß auch Meßfehler beispielsweise durch eine Mittelwertbildung der erhaltenen Ergebnisse reduziert werden können.

In einer weiteren Ausgestaltung des erfindungsgemäßen Verfahrens wird der Kunststoffkörper beim Bestimmen der Position des Oberflächenabschnitts gekühlt. Dementsprechend weist eine erfindungsgemäße Vorrichtung dann Mittel zum Kühlen des Kunststoffkörpers auf.

Diese Maßnahme besitzt den Vorteil, daß das geformte Kunststoffteil während einer kontrollierten Abkühlung, die sich vorzugsweise unmittelbar an den eigentlichen Formvorgang anschließt, auf seine Formtreue und damit auf die Einhaltung vorgegebener Toleranzen überwacht werden kann. Dies ist besonderes vorteilhaft zum Überwachen von Schrumpfprozessen beim Abkühlen. Darüber hinaus kann durch eine zusätzliche Abkühlung erreicht werden, daß das geformte Kunststoffteil schneller in seiner endgültigen Form fixiert wird.

In einer weiteren Ausgestaltung der Erfindung wird der Oberflächenabschnitt des Kunststoffteils im Bereich räumlich aufeinanderfolgender Sensorelemente mit jeweils zumindest einem Auslaß positioniert. Dementsprechend weist eine erfindungsgemäße Vorrichtung mehrere aufeinanderfolgende Sensorelemente mit jeweils zumindest einem Auslaß auf.

Diese Maßnahme besitzt den Vorteil, daß die Bestimmung der Position des Oberflächenabschnitts kontinuierlich auch bei einem bewegten Kunststoffteil erfolgen kann. Dies kann bspw. dazu verwendet werden, die Lage des Kunststoffteils während eines Transportvorganges zu überwachen. Alternativ kann die Maßnahme dazu dienen, die Formtreue eines Kunststoffteils während eines kontrollierten Umformens zu überwachen.

Gemäß einer weiteren Ausgestaltung der Erfindung wird als Parameter ein Druck im Bereich eines mit dem Auslaß verbundenen Hohlraums bestimmt. Dementsprechend beinhalten die Meßmittel der erfindungsgemäßen Vorrichtung einen Drucksensor.

Diese Maßnahme besitzt den Vorteil, daß Drucksensoren an sich im Bereich der industriellen Technik hinreichend bekannt sind und dementsprechend kostengünstig zur Verfügung stehen. Gleichzeitig kann mit Hilfe eines Drucksensors ein für die Austrittsmenge des fluiden Mediums charakteristischer Parameter auf sehr einfache, exakte und gleichzeitig sehr kostengünstige Weise bestimmt werden.

Gemäß einer weiteren Ausgestaltung der Erfindung wird als fluides Medium ein Gas, insbesondere Luft, verwendet.

Da ein Gas sich innerhalb eines zur Verfügung stehenden Hohlvolumens noch schneller und gleichmäßiger ausbreitet, als eine Flüssigkeit, besitzt diese Maßnahme den Vorteil, daß sie schnellere und gleichzeitig genauere Rückschlüsse auf die Position des Oberflächenabschnitts ermöglicht. Darüber hinaus besitzt die Verwendung eines Gases und insbesondere die Verwendung von Luft den Vorteil, daß diese sich nach dem Bestimmen der Position von alleine verflüchtigt, so daß das Kunststoffteil nicht von anhaftenden Rückständen gesäubert werden muß. Die Verwendung von Luft ist im vorliegenden Fall besonders kostengünstig.

In einer weiteren Ausgestaltung des erfindungsgemäßen Verfahrens wird in Abhängigkeit des bestimmten Parameters ein Stellsignal erzeugt. Eine entsprechende Vorrichtung weist daher Mittel zum Erzeugen eines Stellsignals in Abhängigkeit des bestimmten Parameters auf.

Die genannte Maßnahme ist besonders vorteilhaft im Hinblick auf die Steuerung der Greifbewegungen eines Entnahmegreifers, für die das Stellsignal als Antriebssignal unmittelbar verwendet werden kann. Darüber hinaus kann das Stellsignal weitere bevorzugte Reaktionen auslösen, wie beispielweise ein zügiges Anhalten des Herstellungsprozesses in dem Fall, daß außerhalb der Toleranz liegende Formveränderungen bei den überprüften Kunststoffteilen festgestellt werden.

In einer weiteren Ausgestaltung des erfindungsgemäßen Verfahrens wird die Position des Oberflächenabschnitts zum Überprüfen der Formtreue des geformten Kunststoffteils bestimmt.

Diese Maßnahme knüpft an die Überlegungen an, die bereits im Hinblick auf die Verwendung eines Sensorelements in Form einer Sensorfläche gemacht wurden. Die Überprüfung der Formtreue eines Kunststoffteils ist jedoch auch mit einem Sensorelement in Form einer Nadeldüse möglich, wenn das Sensorelement und die entsprechende Oberfläche des Kunststoffteils relativ zueinander bewegt werden. Für sich genommen besitzt die genannte Maßnahme den Vorteil, daß hierdurch ein sehr einfaches und gleichzeitig sehr effizientes Mittel zur Qualitätskontrolle bei einem geformten Kunststoffteil bereitgestellt wird.

In einer alternativen Ausgestaltung der zuvor genannten Maßnahme wird die Position des Oberflächenabschnitts zum Überprüfen einer Raumlage des geformten Kunststoffteils bestimmt.

Auch in diesem Fall kann das Sensorelement sowohl in Form einer Sensorfläche als auch in Form einer oder mehrerer Nadeldüsen ausgebildet sein. Wie bei der zuvor genannten Maßnahme besitzt auch diese Ausgestaltung den Vorteil, daß hierdurch eine sehr einfache und gleichzeitig sehr effiziente Möglichkeit bereitgestellt wird, mit der bspw. die Greifbewegung oder ein Fügevorgang gesteuert werden kann.

Gemäß dem bereits diskutierten, weiteren Aspekt der Erfindung wird die Qualität eines geformten Kunststoffteils bevorzugt dadurch überprüft, daß ein für die Qualität charakteristischer Parameter bestimmt wird, während das Kunststoffteil mit einem Entnahmegreifer aus dem Formnest einer Formmaschine entformt wird.

Diese Maßnahme besitzt sowohl in Kombination mit den zuvor genannten Maßnahmen als auch für sich genommen den Vorteil, daß eine Aussage über die Qualität des geformten Kunststoffteils bereits zu einem sehr frühen Zeitpunkt des Produktionsablaufs bereitgestellt wird. Hierdurch ist es möglich, auf systematische Fehler innerhalb des Produktionsprozesses sehr schnell zu reagieren. Infolgedessen können Kosten aufgrund fehlerhafter oder qualitativ mangelhafter Kunststoffteile beträchtlich reduziert werden. Darüber hinaus besitzt die genannte Maßnahme den Vorteil, daß die Qualitätsprüfung zeitlich in den Produktionsablauf integriert ist, so daß der Produktionsablauf zur Herstellung eines Kunststoffteils insgesamt beschleunigt ist.

Hierdurch kann der Durchsatz einer Kunststoff-Spritzgießanlage erhöht werden.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein erstes Ausführungsbeispiel einer erfindungsgemäßen Vorrichtung in einer schematischen Querschnittsdarstellung,
- Fig. 2: ein zweites Ausführungsbeispiel einer erfindungsgemäßen Vorrichtung in einer der Fig. 1 entsprechenden Darstellung,
- Fig. 3: ein drittes Ausführungsbeispiel einer erfindungsgemäßen Vorrichtung, die mehrere aufeinanderfolgende Sensorelemente in Form von Sensorflächen aufweist,
- Fig. 4: ein viertes Ausführungsbeispiel der Erfindung, bei dem die Durchbiegung einer CD-Hülle mit Hilfe von zwei Nadeldüsen überprüft wird,
- Fig. 5: ein fünftes Ausführungsbeispiel der Erfindung, bei dem die Durchbiegung einer CD-Hülle mit Hilfe nur einer Nadeldüse überprüft wird und
- Fig. 6: ein sechstes Ausführungsbeispiel der Erfindung, bei dem die bestimmungsgerechte Lage eines Kunststoffteils innerhalb eines Entnahmegreifers überprüft wird.

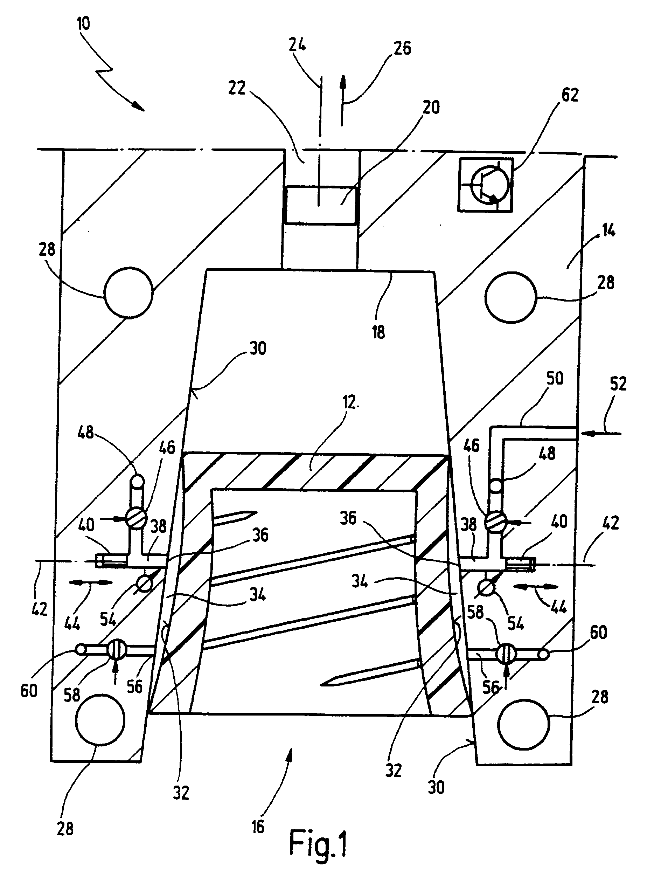

In Fig. 1 ist eine erfindungsgemäße Vorrichtung in ihrer Gesamtheit mit der Bezugsziffer 10 bezeichnet.

Bei der Vorrichtung 10 handelt es sich entsprechend einer bevorzugten Ausführung der Erfindung um einen Entnahmegreifer, mit dem ein in einem Formvorgang hergestelltes Kunststoffteil 12 aus dem Formnest einer Formmaschine (nicht dargestellt) entformt werden kann.

Das hinsichtlich seiner Formtreue zu überprüfende Kunststoffteil 12 ist im vorliegenden Fall eine Schraubkappe, wie sie beispielsweise für Flaschenverschlüsse verwendet wird. Die Schraubkappe 12 ist jedoch nur beispielhaft gewählt und schließt die Anwendung der Erfindung bei anderen Kunststoffteilen nicht aus.

Der Entnahmegreifer 10 besitzt eine im wesentlichen trichterförmige Aufnahme 14, deren Trichter 16 sich in der in Fig. 1 dargestellten Ansicht konisch nach unten aufweitet. Am Grund 18 des Trichters 16 ist ein Kolben 20 angeordnet, der in einer Bohrung 22 mit Hilfe eines hier nur schematisch dargestellten Antriebes 24 beweglich ist. Die Bohrung 22 mündet am Grund 18 in den Trichter 16. Infolgedessen kann durch eine Bewegung des Kolbens 20 in Richtung des Pfeils 26 das Volumen innerhalb des Trichters 16 vergrößert werden, um so einen Unterdruck zu erzeugen. Mit Hilfe eines derartig erzeugten Unterdrucks kann die Schraubkappe 12 in den Trichter 16 der Aufnahme 14 gezogen und darin festgehalten werden.

Mit der Bezugsziffer 28 ist jeweils ein Ringkanal bezeichnet, der konzentrisch um den Trichter 16 herum in der Aufnahme 14 angeordnet ist. Die Ringkanäle 28 sind zum Aufnehmen einer Kühlflüssigkeit vorgesehen, mit deren Hilfe die Aufnahme 14 und somit eine von ihr gehaltene Schraubkappe 12 gekühlt werden können.

Mit der Bezugsziffer 30 ist eine Sensorfläche bezeichnet, die im vorliegenden Fall der konisch sich aufweitenden Innenwand des Trichters 16 entspricht. Wie in der Darstellung in Fig. 1 zu erkennen ist, liegt die Sensorfläche 30 an der äußeren seitlichen Oberfläche 32 der Schraubkappe 12 an, wenn diese in der Aufnahme 14 des Entnahmegreifers 10 gehalten wird. In einer aus Gründen der Übersichtlichkeit übertrieben dargestellten Art ist die seitliche Oberfläche 32 der Schraubkappe 12 verformt. Eine derartige Verformung kann sich beispielsweise als Folge eines Schrumpfvorganges beim Abkühlen der Schraubkappe 12 nach einem Formvorgang ergeben.

Die Sensorfläche 30 ist komplementär zur Soliform der Oberfläche 32 geformt. Aufgrund der Verformung der Schraubkappe 12 liegt die Oberfläche 32 jedoch nicht vollständig an der Sensorfläche 30 an. Infolge dessen besteht zwischen der Sensorfläche 30 und der Oberfläche 32 ein Hohlvolumen 34, dessen Größe ein Maß für die Formabweichung der Schraubkappe 12 von der Sollform ist.

Zum Überprüfen der Formtreue der Schraubkappe 12 weist der Entnahmegreifer 10 mehrere Auslässe 36 auf, die jeweils mit einem Hohlraum zur Aufnahme eines fluiden Mediums, in diesem Fall Luft, verbunden sind. Die einzelnen Hohlräume, von denen in Fig. 1 nur zwei dargestellt sind, sind im vorliegenden Fall durch jeweils eine zylindrische Bohrung 38 gebildet, in der jeweils ein Kolben 40 über einen wiederum nur schematisch dargestellten Antrieb 42 in Richtung der Pfeile 44 bewegbar ist. Des weiteren sind die Bohrungen 38 über jeweils ein Ventil 46 mit einem Ringkanal 48 verbunden. Der Ringkanal 48 ist an eine Leitung 50 angeschlossen, die in der Außenfläche der Aufnahme 14 mündet. Über die Leitung 50 sowie die Ventile 46 können somit die Bohrungen 38 mit Luft gefüllt werden, die in Richtung des Pfeils 52 einströmt.

Mit der Bezugsziffer 54 ist jeweils ein Drucksensor bezeichnet, mit dem der Druck innerhalb jeder der Bohrungen 38 individuell bestimmt werden kann.

Mit der Bezugsziffer 56 sind Einlässe bezeichnet, die ebenso wie die Auslässe 36 in dem Hohlvolumen 34 münden. Die Einlässe 56 sind über jeweils ein Ventil 58 an einen Ringkanal 60 angeschlossen, der eine hier nicht dargestellte Ableitung nach außen besitzt. Über die Einlässe 56, die Ventile 58 sowie den Ringkanal 60 kann somit Luft, die in das Hohlvolumen 34 einströmt, abgeführt werden.

Mit der Bezugsziffer 62 ist eine elektronische Schaltung bezeichnet, die zur Steuerung der Funktionsabläufe des Entnahmegreifers 10 und somit zur Durchführung des erfindungsgemäßen Verfahrens dient. Der Schaltung 62 sind daher die Meßsignale der Drucksensoren 54 zugeführt (hier nicht dargestellt). Darüber hinaus ist die Schaltung 62 in der Lage, Steuersignale zum Steuern der Ventile 46 und 58 zu erzeugen. Die Steuersignale sind durch hier nicht näher bezeichnete Pfeile an den Ventilen 46, 58 angedeutet.

Die hier beispielhaft dargestellte Vorrichtung funktioniert nun wie folgt:

Der Entnahmegreifer 10 nimmt eine Schraubkappe 12, die mit Hilfe einer hier nicht dargestellten Spritzgießmaschine geformt wurde, in an sich bekannter Weise aus dem Formnest der Spritzgießmaschine heraus. Dabei wird die Schraubkappe 12 durch einen Unterdruck, der mit Hilfe des Kolbens 20 erzeugt wird, in die Aufnahme 14 hineingezogen und dort festgehalten. Aufgrund des bereits erwähnten, in den Ringkanälen 28 zirkulierenden Kühlmittels wird die Abkühlung der geformten Schraubkappe 12 innerhalb des Entnahmegreifers 10 beschleunigt. Durch diesen Abkühlvorgang schrumpft die Schraubkappe 12 und verformt sich, wobei sich das Hohlvolumen 34 bildet.

Sobald der Entnahmegreifer 10 die Schraubkappe 12 in seiner Aufnahme 14 gefaßt hat, erzeugt die elektronische Schaltung 62 ein Steuersignal, durch das die Kolben 40 innerhalb der Bohrungen 38 in Richtung der Pfeile 44 bewegt werden, so daß innerhalb der Bohrungen 38 ein Druck aufgebaut wird. Infolge dessen wird ein Teil der in den Bohrungen 38 enthaltenen Luft in das Hohlvolumen 34 gedrückt. Dabei tritt die Luft durch die Auslässe 36 in das Hohlvolumen 34 ein. Je kleiner das Hohlvolumen 34 ist, desto weniger Luft kann bei gleichem Druck durch die Auslässe 36 aus den Bohrungen 38 austreten. Aufgrund des bekannten Volumens der Bohrungen 38 ist der mit Hilfe der Drucksensoren 54 bestimmte Druck innerhalb der Bohrungen 38 somit ein Maß für die Größe des Hohlvolumens 34.

Sollte der Druck innerhalb der Bohrungen 38 zu stark werden, so daß die Gefahr unerwünschter zusätzlicher Verformungen der Schraubkappe 12 besteht, kann die elektronische Schaltung 62 entweder durch Zurücknehmen der Kolben 40 den Druck reduzieren, oder alternativ, durch Öffnen der Ventile 58 ein Entweichen der im Hohlvolumen 34 vorhandenen Luft ermöglichen.

Wenn beim Betätigen der Kolben 40 nahezu keine Luft durch die Auslässe 36 der Bohrungen 38 austreten kann, bedeutet dies, daß die Oberfläche 32 der Schraubkappe 12 paßgenau an der Sensorfläche 30 des Entnahmegreifers 10 anliegt und dabei die Auslässe 36 dicht verschließt. Da die Sensorfläche 30, wie bereits erwähnt, komplementär zu der Sollform der Oberfläche 32 geformt ist, ist dies ein Maß dafür, daß die Oberfläche 32 der Schraubkappe 12 der vorgegebenen Sollform entspricht.

Bei der nachfolgenden Beschreibung weiterer Ausführungsbeispiele bezeichnen gleiche Bezugszeichen dieselben Elemente, die bereits anhand Fig. 1 erläutert wurden.

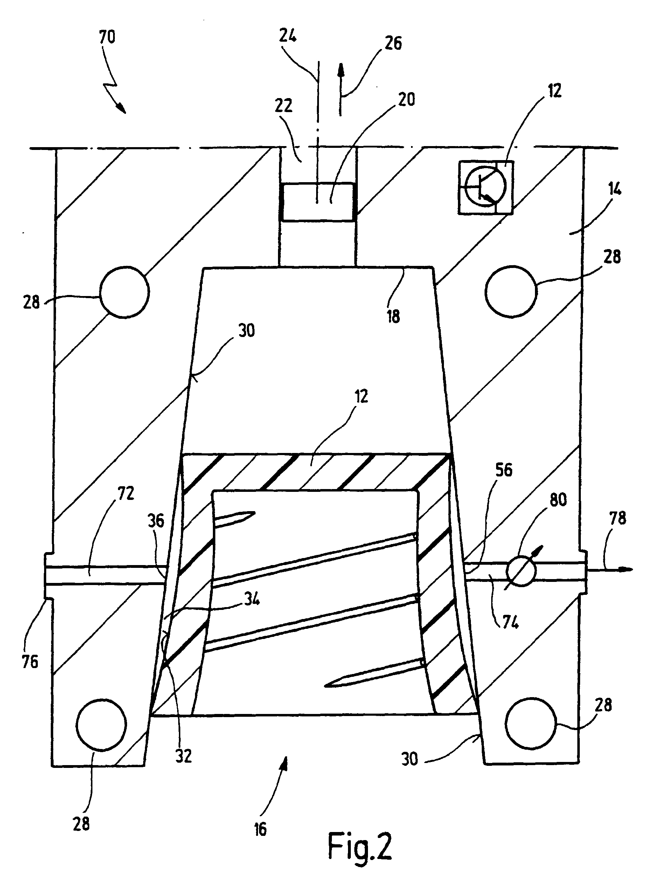

In Fig. 2 ist ein Entnahmegreifer in seiner Gesamtheit mit der Bezugsziffer 70 bezeichnet. Der Entnahmegreifer 70 entspricht in weiten Teilen dem bereits anhand Fig. 1 beschriebenen Entnahmegreifer 10.

Unterschiede bestehen vor allem in der Art, wie das fluide Medium, für das wiederum bevorzugt Luft verwendet wird, in das Hohlvolumen 34 hineingeführt und abgeführt wird. Zu diesem Zweck weist der Entnahmegreifer 70 im Unterschied zum vorhergehenden Ausführungsbeispiel einen Zuführungskanal 72 sowie einen Abführungskanal 74 auf. Der Zuführungskanal 72 kann über einen an der Außenseite der Aufnahme 14 angeordneten Flansch 76 an einen hier nicht dargestellten Druckluftkompressor angeschlossen werden. Der Hohlraum, in dem das fluide Medium erfindungsgemäß mit Druck beaufschlagt wird, ist im vorliegenden Fall daher der Zuführungskanal 72.

Wie im vorliegenden Ausführungsbeispiel kann Luft, die sich in dem Zuführungskanal 72 befindet, durch den Auslaß 36 in das Hohlvolumen 34 eintreten, wenn die Oberfläche 32 der Schraubkappe 12 von ihrer vorgegebenen Sollform abweicht. Aufgrund der in der Regel symmetrischen Ausbildung des Hohlvolumens 34 bei Kunststoffteilen wie der Schraubkappe 12 genügt es dabei im vorliegenden Fall, den Einlaß 56 zum Abführen der in das Hohlvolumen 34 eingeleiteten Luft diametral gegenüber von dem Auslaß 36 anzuordnen. Ein weiterer Unterschied zum vorhergehenden Ausführungsbeispiel ist, daß bei dem Entnahmegreifer 70 als Parameter, der für die Austrittsmenge an Luft charakteristisch ist, die Luftmenge bestimmt wird, die durch den Abführungskanal 74 in Richtung des Pfeils 78 ins Freie strömt. Zu diesem Zweck ist im Verlauf des Abführungskanals 74 ein Luftmengenmesser 80 angeordnet. Die Überprüfung der Formtreue der Schraubkappe 12 erfolgt wiederum in wesentlichen anhand des bestimmten Parameters, in diesem Fall also anhand der gemessenen Luftmenge.

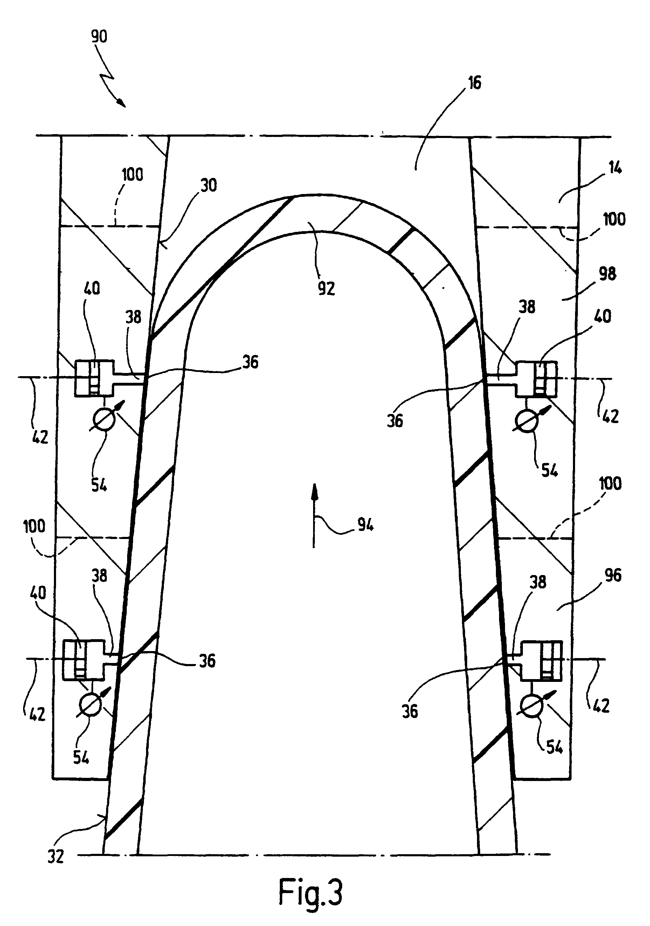

In Fig. 3 ist als weiteres Ausführungsbeispiel der Erfindung eine Formvorrichtung zum Umformen von bereits vorgeformten Kunststoffteilen in ihrer Gesamtheit mit der Bezugsziffer 90 bezeichnet.

Die Formvorrichtung 90 besitzt eine im wesentlichen trichterförmige Aufnahme 14 mit einem sich konisch verjüngenden Trichter 16. Der Trichter 16 dient im vorliegenden Ausführungsbeispiel dazu, ein vorgeformtes Kunststoffteil 92 in Form eines oben geschlossenen Tubus konisch zusammenzupressen. Hierzu wird das Kunststoffteil 92 in Richtung des Pfeils 94 in den Trichter 16 der Aufnahme 14 hineingezogen oder geschoben. Die Funktion der Formvorrichtung 90 ist hier nur beispielhaft zu verstehen und alternativ kann die Formvorrichtung 90 auch als Entnahmegreifer dienen, wie dies bei den vorhergehenden Ausführungsbeispielen der Fall war.

Charakteristisch an der Formvorrichtung 90 im Unterschied zu den vorhergehenden Ausführungsbeispielen ist, daß die Aufnahme 14 im vorliegenden Fall in einzelne Abschnitte unterteilt ist, die hier mit den Bezugsziffern 96 und 98 bezeichnet sind. Die einzelnen Abschnitte liegen unmittelbar aneinander an, so daß ihre hier nur angenommene Trennung voneinander durch gestrichelte Linien 100 angedeutet ist.

Jeder der Abschnitte 96, 98 bildet an der Innenseite des Trichters 16 eine Sensorfläche 30, an der die Oberfläche 32 des Kunststoffteils 92 zur Anlage gelangt. Dabei sind in jeder der räumlich aufeinanderfolgenden Sensorflächen 32 mehrere Auslässe 36 angeordnet, die wie bei dem Entnahmegreifer 10 mit Hohlräumen in Form von Bohrungen 38 verbunden sind. In jeder der Bohrungen 38 ist wiederum ein Kolben 40 mit Hilfe eines nur schematisch dargestellten Antriebes 42 beweglich gelagert. Der Kolben 40 dient dazu, ein innerhalb der Bohrung 38 befindliches fluides Medium mit Druck zu beaufschlagen. Des weiteren ist jede der Bohrungen 38 mit einem eigenen Drucksensor 54 verbunden.

Im Unterschied zu den vorhergehenden Ausführungsbeispielen kann bei der Formvorrichtung 90 die Formtreue des Kunststoffteils 92 stetig über einen großen Bereich der Oberfläche 32 überprüft werden. Des weiteren ist es mit Hilfe der beschriebenen Anordnung möglich, die Formtreue der Oberfläche 32 zu überprüfen, während das Kunststoffteil 92 durch zunehmendes Einschieben in Richtung des Pfeils 94 verformt wird.

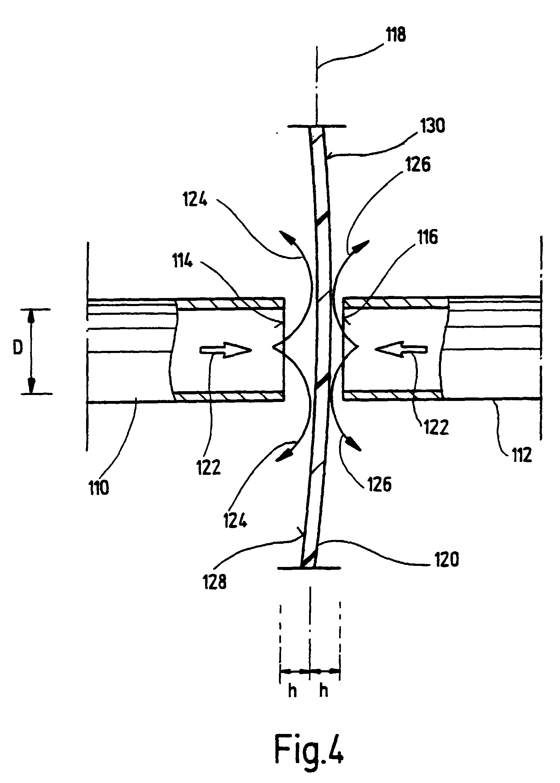

In Fig. 4 sind mit den Bezugsziffern 110 und 112 zwei Nadeldüsen bezeichnet, deren Auslässe 114, 116 einander diametral gegenüberliegend angeordnet sind. Die Symmetrieebene zwischen den beiden Auslässen 114, 116 ist mit der Bezugsziffer 118 bezeichnet. Sie gibt im vorliegenden Ausführungsbeispiel eine Sollkontur vor, entsprechend der das Oberteil 120 einer CD-Hülle (hier nur ausschnittsweise dargestellt) im Idealfall geformt sein soll. In der Darstellung in Fig. 4 weist das Oberteil 120 jedoch eine Wölbung auf, die mit Hilfe der beiden Nadeldüsen 110, 112 feststellbar ist.

Mit der Bezugsziffer 122 ist ein Luftstrom bezeichnet, der durch jede der beiden Nadeldüsen 110, 112 geleitet wird und der an den beiden Auslässen 114, 116 in Richtung der Pfeile 124, 126 austritt. Mit den Bezugsziffern 128, 130 sind die beiden Oberflächenabschnitte des Oberteils 120 bezeichnet.

Wie anhand der Darstellung in Fig. 4 zu erkennen ist, kann der Luftstrom 122 aus der Nadeldüse 110 aufgrund der Wölbung des Oberteils 120 leichter austreten als aus der Nadeldüse 112. Umgekehrt würde eine Durchbiegung des Oberteile 120 in entgegengesetzter Richtung dazu führen, daß der Luftstrom 122 aus der Nadeldüse 112 leichter austreten kann als aus der Nadeldüse 110. Nur in dem Fall, daß die Form des Oberteile 120 exakt der vorgegebenen Sollkontur 118 folgt, wären die Luftströme 122, die aus den beiden Auslässen 114, 116 austreten, gleich. Die Differenz der aus den Auslässen 114, 116 austretenden Luftströme ist daher ein Maß für die Formtreue des Oberteils 120.

Die gezeigte Anordnung setzt voraus, daß der Abstand der beiden diametral gegenüberliegenden Auslässe 114, 116 zu den Oberflächenabschnitten 128, 130 nicht so groß ist, daß die Luftströme 122 auch bei einer Durchbiegung des Oberteils 120 ungestört aus den Auslässen 114, 116 austreten können. Dies ist in jedem Fall gewährleistet, wenn der Abstand h jedes der beiden Auslässe 114, 116 in Bezug auf die Sollkontur 118 kleiner ist als D/4, wobei D den Durchmesser der beiden Auslässe 114, 116 bezeichnet. Der Abstand der beiden Auslässe 114, 116 kann jedoch um die Dicke des Oberteils 120 größer sein. Selbst für den Fall, daß der maximale Abstand, bei dem der Luftstrom 122 beim Austritt aus einer Nadeldüse 110, 112 beeinflußt wird, aufgrund einer starken Durchbiegung des Oberteile 120 zu einer Seite überschritten ist, wird die andere Nadeldüse 112, 110 hier einen für die Durchbiegung charakteristischen Meßwert liefern.

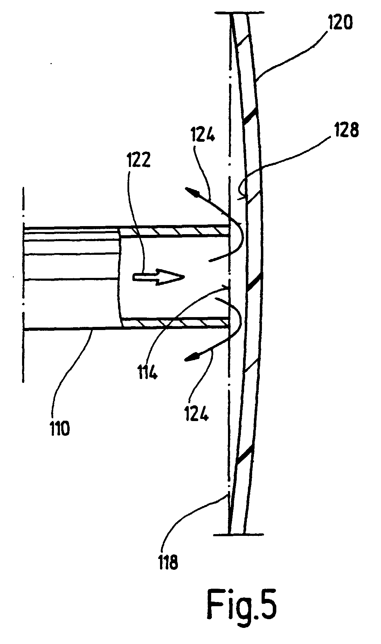

Das Ausführungsbeispiel gemäß Fig. 5 unterscheidet sich von dem Ausführungsbeispiel gemäß Fig. 4 vor allem dadurch, daß hier nur eine Nadeldüse 110 verwendet wird. Der Auslaß 114 dieser Nadeldüse 110 ist hier exakt an der Sollkontur 118 angeordnet, die in diesem Fall exakt der Sollposition des Oberflächenabschnitts 128 entspricht. Wenn das Oberteil 120 entgegen der in Fig. 5 dargestellten Weise keine Durchbiegung aufweist, wird der Auslaß 114 der Nadeldüse 110 durch den Oberflächenabschnitt 128 verschlossen. In diesem Fall kann daher keine Luft in Richtung der Pfeile 124 aus dem Auslaß 114 austreten. In der in Fig. 5 dargestellten Situation besteht jedoch zwischen dem Auslaß 114 der Nadeldüse 110 und dem Oberflächenabschnitt 128 des Oberteils 120 ein Spalt, durch den Luft in Richtung der Pfeile 124 austreten kann. Die Austrittsmenge der Luft ist hier wiederum ein Maß für die Position des Oberflächenabschnitts 128 und damit im vorliegenden Fall für die Durchbiegung des Oberteils 120 der CD-Hülle.

Wie leicht nachzuvollziehen ist, kann mit Hilfe der in Fig. 4 und 5 gezeigten Anordnung anstelle der Durchbiegung des Oberteils 120 auch die Raumlage eines Kunststoffteils in Bezug auf die Nadeldüsen 110 bzw. 112 bestimmt werden.

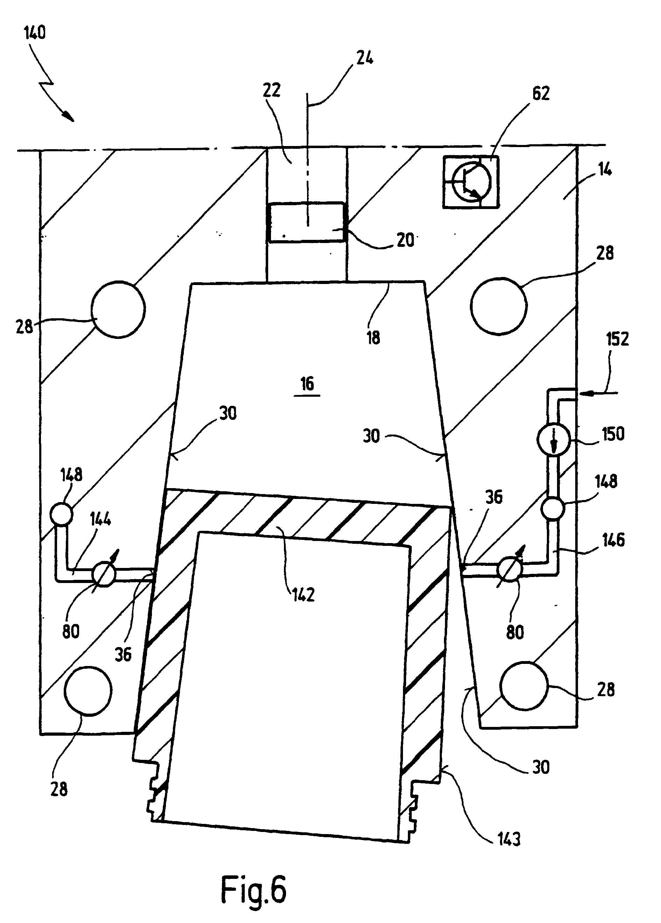

Eine derartige Anwendung ist auch in dem Ausführungsbeispiel gemäß Fig. 6 gezeigt. Darin ist ein Greifer zum Aufnehmen und Halten eines Kunststoffteils in seiner Gesamtheit mit der Bezugsziffer 140 bezeichnet. Der Greifer 140 entspricht weitgehend den Greifern 10, 70 der Ausführungsbeispiele gemäß den Fig. 1 und 2.

In Fig. 6 hält der Greifer 140 ein Kunststoffteil 142, bei dem es sich hier um ein dickwandiges Gefäß in Form einer Cremedose handelt. Derartige Cremedosen werden bspw. in der Kosmetikindustrie verwendet.

Die innenseitige Greiffläche des Trichters 16 des Greifers 140 bildet - wie auch bei den Ausführungsbeispielen gemäß den Fig. 1 und 2 - eine Sensorfläche, mit der die Position der seitlichen Oberfläche 143 der Cremedose 142 bestimmbar ist. Daran anschließend kann hier die Raumlage der Cremedose 142 in Bezug auf den Greifer 140 bestimmt werden.

Der Greifer 140 weist zur Bestimmung der Raumlage der Cremedose 142 zwei voneinander getrennte Kanäle 144, 146 auf, in denen jeweils ein Luftmengenmesser 80 angeordnet ist. Die Kanäle 144, 146 werden über einen gemeinsamen Ringkanal 148 sowie eine Pumpe 150 mit Luft gefüllt, die in Richtung des Pfeils 152 in das Kanalsystem einströmt.

In der in Fig. 6 gezeigten Situation sitzt die Cremedose 142 "schief" in der Aufnahme 14 des Greifers 140. Ein Maß für diese Schieflage ist die Differenz der Luftmengen, die aus den Kanälen 144 bzw. 146 austritt, wenn der Ringkanal 148 mit Hilfe der Pumpe 150 stetig mit Luft versorgt wird.

## Patentansprüche

1. Verfahren zum Bestimmen der Position eines Oberflächenabschnitts (32; 128, 130; 143) eines geformten Kunststoffteils (12; 92; 120; 142), gekennzeichnet durch die Schritte:
- Bereitstellen eines Sensorelements (30; 96, 98; 110, 112) mit zumindest einem Auslaß (36; 114, 116) für ein fluides Medium (52; 78; 122, 124, 126; 152), wobei der Auslaß (36; 114, 116) im Bereich einer Sollposition (118) des Oberflächenabschnitts (32; 128, 130; 143) positioniert wird,
- Ausströmenlassen des fluiden Mediums (52; 78; 122, 124, 126; 152) durch den Auslaß (36; 114, 116) und
- Bestimmen eines Parameters, der für eine Austrittsmenge des fluiden Mediums (52; 78; 122, 124, 126; 152) aus dem Auslaß (36; 114, 116) charakteristisch ist.

2. Verfahren nach Anspruch 1, dadurch gekennzeichnet, daß durch den Auslaß (36) ausgetretenes fluides Medium (52; 78) über zumindest einen in der Sensorfläche (30) angeordneten Einlaß (56) abgeführt wird.

3. Verfahren nach Anspruch 2 oder 3, dadurch gekennzeichnet, daß über die Sensorfläche (30) räumlich verteilt mehrere Auslässe (36) angeordnet sind, und daß der genannte Parameter für jeden der verteilten Auslässe (36) individuell bestimmt wird.

4. Verfahren nach einem der Ansprüche 1 bis 3, dadurch gekennzeichnet, daß das Kunststoffteil (12; 92; 142) beim Bestimmen der Position des Oberflächenabschnitts (32; 143) gekühlt wird.

5. Verfahren nach einem der Ansprüche 1 bis 4, dadurch gekennzeichnet, daß als Parameter ein Druck im Bereich eines mit dem Auslaß (36) verbundenen Hohlraums (38) bestimmt wird.

6. Verfahren nach einem der Ansprüche 1 bis 5, dadurch gekennzeichnet, daß als fluides Medium (52; 78; 122, 124, 126; 152) ein Gas, insbesondere Luft, bereitgestellt wird.

7. Verfahren nach einem der Ansprüche 1 bis 6, dadurch gekennzeichnet, daß in Abhängigkeit des bestimmten Parameters ein Stellsignal erzeugt wird.

8. Verfahren nach einem der Ansprüche 1 bis 7, dadurch gekennzeichnet, daß die Position des Oberflächenabschnitts (32; 128, 130) zum Überprüfen der Formtreue oder zum Überprüfen einer Raumlage des geformten Kunststoffteils (12; 92; 120) bestimmt wird.

9. Vorrichtung zum Bestimmen der Position eines Oberflächenabschnitts (32; 128, 130; 143) eines geformten Kunststoffteils (12; 92; 120; 142), gekennzeichnet durch ein Sensorelement (30; 96, 98; 110, 112), mit zumindest einem Auslaß (36; 114, 116) für ein fluides Medium (52; 78; 122, 124, 126; 152), wobei der Auslaß (36; 114, 116) im Bereich einer Sollposition (118) des Oberflächenabschnitts (32; 128, 130; 143) positioniert ist, ferner mit Mitteln (40, 42) zum Ausströmenlassen des fluiden Mediums (52; 78; 122, 124, 126; 152) aus dem Auslaß (36; 114, 116) und mit Meßmitteln (54; 80) zum Bestimmen eines Parameters, der für eine Austrittsmenge des fluiden Mediums (52; 78; 122, 124, 126; 152) aus dem Auslaß (36; 114, 116) charakteristisch ist.

10. Vorrichtung nach Anspruch 9, dadurch gekennzeichnet, daß der Auslaß (36; 114) direkt an der Sollposition (118) positioniert ist.

11. Vorrichtung nach Anspruch 9 oder 10, dadurch gekennzeichnet, daß das Sensorelement (30) eine Sensorfläche aufweist, die komplementär zu einer Sollform des Oberflächenabschnitts (32) geformt ist.

12. Vorrichtung nach Anspruch 11, dadurch gekennzeichnet, daß in der Sensorfläche (30) zumindest ein Einlaß (56) zum Abführen von fluidem Medium (52; 78) angeordnet ist, das aus dem Auslaß (36) ausgetreten ist.

13. Vorrichtung nach Anspruch 11 oder 12, dadurch gekennzeichnet, daß über die Sensorfläche (30) räumlich verteilt mehrere Auslässe (36) angeordnet sind.

14. Vorrichtung nach einem der Ansprüche 11 bis 13, dadurch gekennzeichnet, daß die Sensorfläche (30) eine Greiffläche eines Entnahmegreifers (10; 70; 140) ist.

15. Vorrichtung nach Anspruch 9 oder 10, dadurch gekennzeichnet, daß das Sensorelement (110; 110, 112) zumindest eine Nadeldüse aufweist.

16. Vorrichtung nach Anspruch 15, dadurch gekennzeichnet, daß das Sensorelement (110, 112) zwei Nadeldüsen aufweist, deren Auslässe (114, 116) diametral zueinander angeordnet sind.

17. Vorrichtung nach einem der Ansprüche 9 bis 16, dadurch gekennzeichnet, daß sie Mittel (28) zum Kühlen des Kunststoffteils (12; 92; 142) aufweist.

18. Vorrichtung nach einem der Ansprüche 9 bis 17, dadurch gekennzeichnet, daß sie mehrere räumlich aufeinanderfolgende Sensorelemente (96, 98) mit jeweils zumindest einem Auslaß (36) aufweist.

19. Vorrichtung nach einem der Ansprüche 9 bis 18, dadurch gekennzeichnet, daß die Meßmittel (54) einen Drucksensor beinhalten.

20. Verfahren zum Überprüfen der Qualität eines geformten Kunststoffteils (12; 92; 120), insbesondere seiner Formtreue, wobei ein für die Qualität charakteristischer Parameter des Kunststoffteils (12; 92; 120) bestimmt wird, dadurch gekennzeichnet, daß der charakteristische Parameter bestimmt wird, während das Kunststoffteil (12; 92; 120) mit einem Entnahmegreifer (10; 70) aus dem Formnest einer Formmaschine entformt wird.

21. Vorrichtung zum Überprüfen der Qualität eines geformten Kunststoffteils (12; 92; 120), insbesondere seiner Formtreue, mit Mittel (30, 36, 54; 30, 36, 80) zum Bestimmen eines für die Qualität des Kunststoffteils (12; 92; 120) charakteristischen Parameters, dadurch gekennzeichnet, daß die Mittel (30, 36, 54; 30, 36, 80) an einem Entnahmegreier (10; 70) zum Entformen des Kunststoffteils (12; 92; 120) aus dem Formnest einer Formmaschine angeordnet sind.
